Europäisches Patentamt

European Patent Office

Office européen des brevets

(11) Veröffentlichungsnummer: **0 037 554**
**B1**

(12) **EUROPÄISCHE PATENTSCHRIFT**

(45) Veröffentlichungstag der Patentschrift:
02.03.83

(21) Anmeldenummer: 81102450.4

(22) Anmeldetag: 01.04.81

(51) Int. Cl.³: **B 23 B 27/16**

(54) **Schneidwerkzeug.**

(30) Priorität: **04.04.80 AT 1880/80**

(43) Veröffentlichungstag der Anmeldung:
**14.10.81 Patentblatt 81/41**

(45) Bekanntmachung des Hinweises auf die Patenterteilung:
**02.03.83 Patentblatt 83/9**

(84) Benannte Vertragsstaaten:
**BE CH DE FR GB IT LI NL SE**

(56) Entgegenhaltungen:
**DD-A-107 221**
**DE-A-2 703 696**
**DE-B-1 901 921**
**DE-B-1 948 160**
**DE-B-2 257 966**
**DE-B-2 402 971**
**DE-C-1 552 296**
**US-A-3 654 682**
**US-A-3 946 473**

(73) Patentinhaber: **METALLWERK PLANSEE
GESELLSCHAFT M.B.H., A-6600 Reutte, Tirol (AT)**

(72) Erfinder: **Kröll, Augustin, Mittenwaldbahnstrasse 16,
A-6600 Breitenwang (AT)**

(74) Vertreter: **Lohnert, Wolfgang, Dr., Metallwerk Plansee
GmbH, A-6600 Reutte, Tirol (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Schneidwerkzeug

Die Erfindung betrifft ein Schneidwerkzeug, das in seinem Werkzeugkörper eine Bohrung sowie eine Ausnehmung mit einer Auflagefläche und mindestens eine seitliche Anlagefläche für eine mittels Spannbolzen festklemmbare Wendeschneidplatte mit Mittelloch aufweist, wobei der rotationssymmetrisch ausgebildete Spannbolzen mit seinem oberen Ende von etwa der Gestalt einer abgekappten Kugel in das Mittelloch eingreift, mit seinem unteren Ende in einer Gewindebohrung des Werkzeugkörpers verschraubbar ist und sich mit seinem Mittelbereich gegen den Werkzeugkörper abstützt, wobei die Achse der Gewindebohrung zur Achse der Bohrung im Werkzeugkörper schräg verläuft.

Ein solches Schneidwerkzeug ist aus der DE-B2-1 948 160 bekannt. Wendeschneidplatten mit Mittelloch werden üblicherweise mittels Klemmschraube im Werkzeugkörper eingeschraubt, mittels eines in das Mittelloch eingreifenden Spannbolzens durch Kippen desselben festgeklemmt oder auch über Einschrauben und gleichzeitiges Kippen des Spannbolzens im Werkzeugkörper befestigt.

So ist aus der DE-C-1 552 296 ein Schneidwerkzeug bekannt, das aus einem Werkzeughalter und einer auswechselbaren Wendeschneidplatte im Mittelloch besteht. Die Wendeschneidplatte ist über einen in einer Schaftbohrung angeordneten und in einer Gewindebohrung des Werkzeugschaftes verschraubbaren Spannbolzen, der mit seinem Kopfteil in das Mittelloch der Wendeschneidplatte eingreift, festklemmbar. Der an die Ausnehmung zur Aufnahme der Wendeschneidplatte angrenzende Abschnitt der Schaftbohrung verjüngt sich nach unten hin kegelstumpfförmig und wirkt mit einem sich nach unten hin kegelstumpfförmig verjüngenden Abschnitt des Spannbolzens zusammen. Die Längsachse des kegelstumpfförmigen Abschnitts ist gegenüber der Längsachse der s. anschließenden Gewindebohrung zur Anlagefläche der Schneidplatte hin versetzt, so daß sich beim Einschrauben des Spannbolzens eine Kippbewegung und damit ein Festklemmen der Wendeschneidplatte ergibt. Bei diesem System wird als Nachteil empfunden, daß vor allem die in Richtung Wendeschneidplatte-Auflagefläche erzielbare Klemmkraft der Wendeschneidplatte nicht ausreichend groß ist, so daß die Wendeschneidplatte bei größeren Belastungen von der Auflagefläche abheben kann. Dieser Nachteil ist bedingt durch die nur geringfügige Relativbewegung der Klemmfläche des Spannbolzens gegenüber der Mittellochwandung der Wendeschneidplatte.

Die DE-B2-2 402 971 beschreibt einen Schneidwerkzeughalter zur Aufnahme einer Mittelloch-Wendeschneidplatte, die in einer Ausnehmung auf einer Auflageplatte angeordnet ist und mittels eines in einer Gewindebohrung des Halterschaftes verschraubbaren Spannbolzens gegen entsprechende Anlageflächen und die Auflageplatte festklemmbar ist. Ein konischer Abschnitt des Spannbolzens liegt dabei an einer Gegenfläche in Form einer Ausbuchtung an, die an einer den Spannbolzen wenigstens teilweise umbiegenden Hülse, welche in eine Bohrung des Halterschaftes eingesetzt ist, angebracht ist. Die vorzugsweise elastische Hülse ist mit einem Ringbund versehen, der in einer entsprechenden Ausnehmung der Auflageplatte aufliegt. Beim Einschrauben wird der Klemmbolzen durch die Ausbuchtung abgelenkt, und der in das Mittelloch eingreifende Kopfteil klemmt die Wendeschneidplatte fest. Der Nachteil bei diesem Werkzeughalter liegt darin, daß es bei seitlichen Belastungen der Wendeschneidplatte zu einem seitlichen Ausweichen des Klemmbolzens und damit zu einer Lösung der Klemmung der Wendeschneidplatte kommen kann. Außerdem kann es dadurch, daß die Hülse unsymmetrisch aufgebaut ist, bei einer schlechten Positionierung derselben zu einer mangelhaften oder ungünstigenfalls zu gar keiner Klemmung der Wendeschneidplatte kommen, so daß die Hülse genau positioniert werden muß.

In der DE-A1-2 703 696 ist ebenfalls ein Schneidwerkzeug beschrieben, bei dem in einer Ausnehmung des Werkzeugkörpers eine Mittelloch-Wendeschneidplatte auf einer Auflageplatte aufliegt und durch einen einschraubbaren Spannbolzen festklemmbar ist, dessen Kopfteil in das Mittelloch der Wendeschneidplatte eingreift. Der Spannbolzen ist zumindest teilweise von einer in einer Bohrung des Werkzeugkörpers eingesetzten Buchse mit Ringbund umgeben, die an einer entsprechenden Fläche der Auflageplatte aufliegt. Die Buchse weist an ihrer Stirnseite eine Abschrägung in Form eines Kegelstumpfes auf, auf die ein unmittelbar unterhalb der Wendeschneidplatte angeordneter Bund des Spannbolzens beim Einschrauben einseitig auftritt. Der Bolzen wird dadurch gekippt und klemmt die Wendeschneidplatte zur Auflagefläche und zu den seitlichen Auflageflächen hin fest.

Nachteilig bei dieser Ausführung ist, daß die Kontaktfläche der Buchse mit dem Band des Spannbolzens außerhalb des Werkzeugschaftbereichs in der Unterlagsplatte liegt, dadurch ein Biegemoment aufnehmen und somit besonders stabil ausgeführt sein muß, und nur über eine fertigungstechnisch aufwendige Preßpassung ausreichend fest im Werkzeugschaft gehalten werden kann.

Den vorstehend beschriebenen Systemen ist gemeinsam, daß die Klemmung einer Wendeschneidplatte sowohl gegen die Auflagefläche als auch gegen mindestens eine seitliche Anlagefläche mittels Einschrauben und gleichzeitigem Kippen eines Spannbolzens erfolgen soll, daß aber gemessen an den heutigen Anforderungen die erzielbare Klemmung systembedingt ganz allgemein, zumindest aber nicht in den beiden genannten Richtungen gleichzeitig als ausreichend angesehen werden kann. Gründe hierfür sind zu große Reibungskräfte bzw. ein mit dem Einschrauben zu starkes Anwachsen der Reibungskräfte zwischen Spannbolzen und Werkzeugkörper im Vergleich zu den vom Spannbolzen auf die Wendeschneidplatte übertragenen Kräften. Zudem sind konstruktive Elemente bzw. die mangelnde Berücksichtigung einer mit Toleranzen behafteten Fertigung dieser Elemente für in Einzelfällen unzuverlässige Positionierung und Klemmung der Wendeschneidplatte verantwortlich.

Ein entscheidender Nachteil bei den vorbekannten Systemen ist auch darin zu sehen, daß die Änderung der Druckkräfte vom Spannbolzen auf die Mittellochwand einer Wendeschneidplatte mit dem Eindrehen des Spannbolzens um jeweils einen konstanten Drehwinkel gleichbleibend bis zunehmend ist, wodurch ein langsames Heranfahren an und damit ein sicheres Erreichen des mit einem vorgegebenen Drehmoment am Spannschlüssel möglichen Grenzwertes der Druckkräfte zwischen Spannbolzen und Wendeschneidplatte in der Regel nicht entfernt erzielt wird.

Aufgabe der vorliegenden Erfindung ist danach die Schaffung eines Schneidwerkzeug vorstehend genannten Typs, bei dem die genannten Nachteile wesentlich vermindert sind und das demnach für die bekannten Wendeschneidplatten mit Mittelloch eine befriedigende Klemmung sowohl gegen die Plattenunterlage als auch gegen die seitliche Plattenanlage gewährleistet, wobei der Einfluß von Fertigungstoleranzen auf die Plattenklemmung herabgesetzt werden soll. Die Aufgabe besteht insbesondere darin, Maßnahmen zu setzen, daß die Zunahme der vom Spannbolzen auf die Wendeschneidplatten-Mittellochwandung übertragenen Druckkräfte mit dem fortlaufenden Einschrauben eines Spannbolzens in eine Gewindebohrung im Werkzeugschaft abnimmt, die Kraftzunahme also degressiv ist.

Die der Erfindung zugrunde liegende Aufgabe wird dadurch gelöst, daß die Bohrung in ihrem an die Ausnehmung angrenzenden Bereich zwei achsgleiche Zylinderabschnitte mit voneinander abweichenden Durchmessern und mit einer Achsrichtung senkrecht zur Schneidplattenauflagefläche besitzt, wobei sich der obere Zylinderabschnitt über eine im Längsschnitt kreisförmig gekrümmte Schulter zum unteren Zylinderabschnitt hin verjüngt, die stufenlos in die Mantelfläche des unteren Zylinderabschnitts einmündet, daß sich der Spannbolzen im Mittelbereich von einem Zylinderabschnitt über eine im Längsschnitt kreisförmig gekrümmte Schulter zu einem Schaft mit Gewinde hin verjüngt, wobei der Zylinderabschnitt stufenlos in die Schulterfläche einmündet, daß die Kreisradien der einzelnen Schultern jeweils in einem Verhältnis von 1 : 1 bis 1 : 2,3 zum Radius des Zylinderabschnitts des Mittelbereichs des Spannbolzens stehen und daß die Achse des Gewindes im Werkzeugkörper mit der Achse der Zylinderabschnitte einen Winkel von 2° bis 7° einschließt.

In einer vorteilhaften Ausgestaltung der Erfindung sind die zwei über eine Schulter verbundenen Zylinderabschnitte in einer Hülse angeordnet, die in eine Ausnehmung mit gleichbleibendem Durchmesser des Werkzeugkörpers eingesetzt ist.

In einer besonders vorteilhaften weiteren Ausgestaltung ist diese Hülse in Längsrichtung geschlitzt und mit einem Ringbund versehen, der in einer Ausnehmung einer Unterlagsplatte aufliegt und die Unterlagsplatte mit dem Werkzeugkörper verbindet. Dadurch wird erreicht, daß die durch die Erfindung erzielbaren optimalen Klemmkräfte auch bei Schneidwerkzeugen, die mit Unterlagsplatten versehen sind, erzielt werden können und gleichzeitig eine sichere Verbindung von Unterlagsplatte und Werkzeugkörper auch bei einem ungeklemmen Zustand der Wendeschneidplatte zustande kommt.

Zwei Ausführungsbeispiele von Schneidwerkzeugen gemäß der Erfindung sind durch Figuren dargestellt und werden nachfolgend näher erläutert.

Es zeigt

Fig. 1 Schneidwerkzeug im Schnitt, bei dem die zwei über eine Schulter verbundenen Zylinderabschnitte durch eine Bohrung des Werkzeugkörpers gebildet sind.

Fig. 2 Schneidwerkzeug im Schnitt, bei dem die zwei über eine Schulter verbundenen Zylinderabschnitte durch eine in die Bohrung des Werkzeugkörpers eingesetzte Hülse gebildet sind.

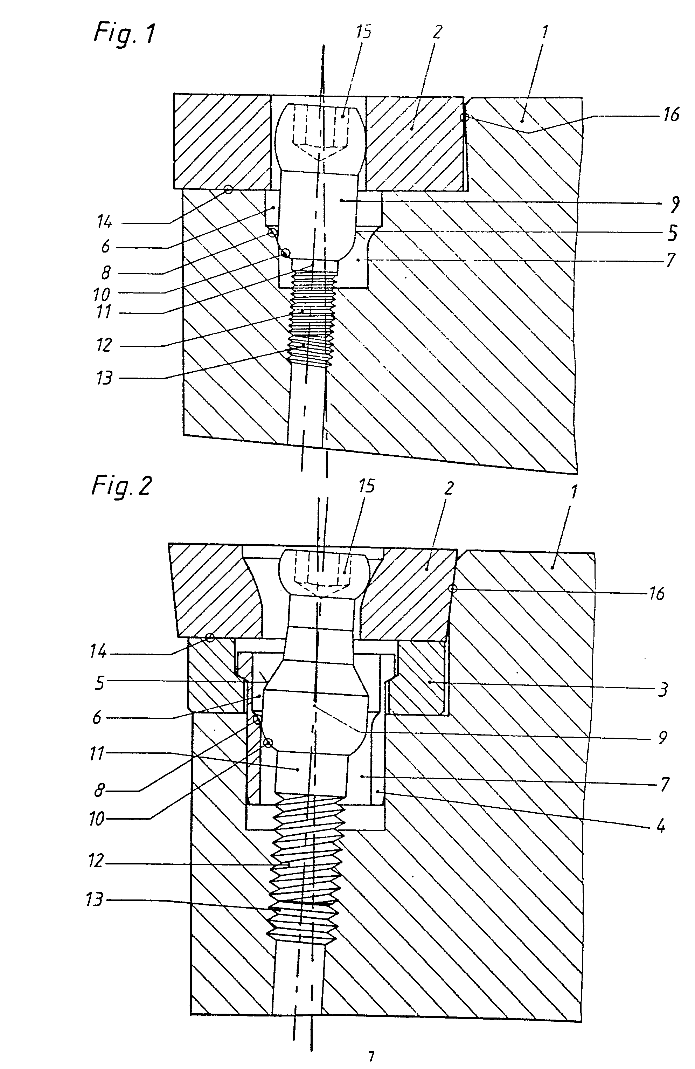

Fig. 1 zeigt ein Schneidwerkzeug, bei dem in einer Ausnehmung des Werkzeugkörpers —1— eine Wendeschneidplatte —2— mit Mittelloch angeordnet ist. Unmittelbar unter der Wendeschneidpaltte —2— ist der Werkzeugkörper —1— mit einer Bohrung versehen. Der an die Ausnehmung angrenzende Bereich dieser Bohrung weist zwei achsgleiche Zylinderabschnitte —6, 7— auf, an die sich eine Gewindebohrung —13—, deren Längsachse gegenüber der Längsachse der Bohrung —6, 7— zur seitlichen Anlagefläche —16— der Wendeschneidplatte —2— hin um 3° geneigt ist, anschließt. Der obere Zylinderabschnitt —6— mit größerem Durchmesser geht über eine im Längsschnitt kreisförmig gekrümmte Schulter —8— zum unteren Zylinderabschnitt —7— mit kleinerem Durchmesser über. Die Krümmungsfläche der Schulter —8— mündet dabei stufenlos in die Mantelfläche des unteren Zylinderabschnittes —7— ein. In dieser Bohrung des Werkzeugkörpers ist ein rotationssymmetrisch ausgebildeter Spannbolzen —5— mit der Gewindebohrung —13— verschraubbar angeordnet.

Der Spannbolzen —5— weist einen Kopfteil —15— in Form einer abgekappten Kugel, einen Zylinderabschnitt —9— im Mittelbereich sowie einen Schaft —11— mit einem Gewindeabschnitt —12— auf. Der Schaft —11— weist einen gegenüber dem Zylinderabschnitt —9— kleineren Durchmesser auf und ist über eine im Längsschnitt kreisförmig gekrümmte Schulter —10— mit dem Zylinderabschnitt —9— verbunden. Die Krümmungsfläche mündet dabei stufenlos in den Zylinderabschnitt —9— ein. Im nicht klemmenden Zustand wird der Spannbolzen —5— nur in der Gewindebohrung —13— gehalten, ohne mit seinem Mittelbereich an der Wandung der Werkzeugkörperbohrung anzuliegen. Der Kopfteil —15— des Spannbolzens —5— befindet sich in der Mitte der Wendeschneidplatten-Mittelbohrung und liegt ebenfalls nicht an der Wandung an. Beim Einschrauben des Spannbolzens —5— trifft die kreisförmig gekrümmte Schulter —10— des Spannbolzens —5— auf die kreisförmig gekrümmte Schulter —8—, die die Zylinderabschnitte —6, 7— der Bohrung des Werkzeugkörpers —1— miteinander verbindet, auf. Der Radius der Schulter —8— steht in einem Verhältnis von 1 : 1,2 zum Durchmesser des Zylinderbereiches —9— jener der Schulter —10— in einem Verhältnis von 1 : 1,3. Dadurch erfährt der Spannbolzen —5— eine degressive Ablenkung. Bei Auftreffen der in das Mittelloch der Wendeschneidplatte —2— eingreifenden Druckfläche des Spannbolzenkopfes —15— auf die Lochwandung wird die Auskippung des Bolzens —5— stark reduziert. Bei weiterem Einschrauben wird die Wendeschneidplatte —2— mit optimalen Klemmkraftkomponenten in Richtung der Auflagefläche —14— und in Richtung der seitlichen Anlagefläche —16— festgeklemmt. Die Achse der Gewindebohrung —13— ist gegenüber der Achse der Zylinderabschnitte —6, 7— um 3° geneigt, so daß die Längsachse des Spannbolzens —5— in geklemmtem Zustand etwa mit der Längsachse der Gewindebohrung —13— zusamenfällt. Durch diese Maßnahme wird eine Gewindeberührung über den gesamten Gewindeabschnitt erreicht. Eine vorzeitige unerwünschte Selbsthemmung des Gewindes wird vermieden. Außerdem wird die Gewindereibung sehr klein gehalten, wodurch die Klemmkraft voll auf die Wendeschneidplatte —2— übertragen werden kann.

Fig. 2 zeigt eine weitere Ausgestaltung eines Schneidwerkzeugs entsprechend der Erfindung, bei dem die Wendeschneidplatte —2— auf einer Unterlagsplatte —3— in einer Ausnehmung des Werkzeugkörpers —1— angeordnet ist. Die Unterlagsplatte —3— weist konzentrisch zu ihrem Mittelloch eine ringförmige Ausnehmung auf, in der der Ringbund einer Hülse —4— aufliegt. Die Hülse —4— ist federnd in Längsrichtung geschlitzt ausgeführt und in einer zylindrischen Bohrung der Werkzeugkörper —1— angeordnet. Die Bohrung der Buchse weist einen oberen Zylinderabschnitt —6— mit einem größeren sowie einen unteren Zylinderabschnitt mit einem kleineren Durchmesser auf, die über eine im Längsschnitt kreisförmig gekrümmte Schulter —8— miteinander verbunden sind. Die Krümmungsfläche der Schulter —8— mündet dabei stufenlos in die Mantelfläche des unteren Zylinderabschnitts —7— ein. Anschließend an die zylindrische Bohrung des Werkzeugkörpers —1— schließt sich eine Gewindebohrung —13— an, deren Längsachse gegenüber der Längsachse der Hülse —4— zur seitlichen Anlagefläche —16— der Wendeschneidplatte —2— hin um 3° geneigt ist. Der Spannbolzen —5— weist einen Kopfteil —15— von etwa der Form einer abgekappten Kugel einem Zylinderabschnitt —9— sowie einen Schaft —11— mit einem Gewindeabschnitt —12— auf. Der Schaft —11— weist einen gegenüber dem Zylinderabschnitt —9— kleineren Durchmesser auf und ist über eine im Längsschnitt kreisförmig gekrümmte Schulter —10— mit dem Zylinderabschnitt —9— verbunden. Die Krümmungsfläche mündet dabei stufenlos in den Zylinderabschnitt —9— ein. Der Radius der Schulter —8— steht in einem Verhältnis von 1 : 2,2 zum Durchmesser des Zylinderabschnittes —9—, jener der Schulter —10— in einem Verhältnis von 1 : 1,5.

Ein wesentlicher Vorteil des Schneidwerkzeugs gemäß vorliegender Erfindung liegt in einer degressiven Zunahme der Druckkräfte vom Spannbolzen auf die Mittellochwand mit dem Eindrehen des Spannbolzens um einen konstanten Winkel. Entscheidung hierfür ist die im Längsschnitt etwa kreisförmig ausgestaltete Schulter zwischen den beiden Zylinderabschnitten für die Bohrung im Werkzeugkörper sowie der stufenlose Übergang von der Schulterfläche zur Mantelfläche des Zylinders mit kleinerem Durchmesser.

Die gegen die Senkrechte geneigte Achse der Gewindebohrung gewährleistet eine Verstetigung des oben beschriebenen Effekts für den Fall, daß der Anlagepunkt der Schulter des Mittelteils vom Spannbolzen über die Schulter zwischen den zwei Zylinderabschnitten hinaus in den Bereich der Mantelfläche des unteren Zylinderabschnitts zu liegen kommt.

Die Radienverhältnisse der beiden Schultern und des Bolzenmittelteils zueinander gewährleisten unter Zugrundelegung heute akzeptierter Gesamtabmessungen von Werkzeugkörpern einen praktischen Ausgestaltungsbereich, in dem die genannten Vorteile hinsichtlich degressiver Kraftzunahme besonders vorteilhaft nutzbar gemacht werden können.

Die Neigung der Achse der Gewindebohrung gegen die Senkrechte zur Plattenauflage bringt weiterhin den entscheidenden Vorteil, daß beim Einsetzen der Klemmung mit dem Einschrauben des Spannbolzens nicht sogleich eine nennenswerte Kippung und damit Verklemmung des Gewindebolzens im Gewindeloch erfolgt, wie dies bei bekannten Systemen der Fall ist.

Vielmehr baut sich bei dem vorliegenden Schneidwerkzeug mit dem Eindrehen des Spannbolzens stetig und in der Zunahme degressiv gleichermaßen sowohl ein Klemmdruck in Richtung seitlicher Anlagefläche als auch in Richtung Plattenunterlage auf.

Das Schneidwerkzeug gemäß vorliegender Erfindung wird daher als Dreh-, Bohr- oder Fräswerkzeug überall dort zur Anwendung kommen, wo auf Grund der durchzuführenden Zerspanungsoperationen hohe Anforderungen an den Plattensitz gestellt sind.

## Patentansprüche

1. Schneidwerkzeug, das in seinem Werkzeugkörper (1) eine Bohrung sowie eine Ausnehmung mit einer Auflagefläche (14) und mindestens eine seitliche Anlagefläche für eine mittels Spannbolzen (5) festklemmbare Wendeschneidplatte (2) mit Mittelloch aufweist, wobei der rotationssymmetrisch ausgebildete Spannbolzen mit seinem oberen Ende (15) von etwa der Gestalt einer abgekappten Kugel in das Mittelloch eingreift, mit seinem unteren Ende in einer Gewindebohrung (13) des Werkzeugkörpers verschraubbar ist und sich mit seinem Mittelbereich gegen den Werkzeugkörper (1) abstützt, wobei die Achse der Gewindebohrung (13) zur Achse der Bohrung (6, 7) im Werkzeugkörper schräg verläuft, dadurch gekennzeichnet, daß die Bohrung in ihrem an die Ausnehmung angrenzenden Bereich zwei achsgleiche Zylinderabschnitte (6, 7) mit voneinander abweichenden Durchmessern und mit einer Achsrichtung senkrecht zur Schneidplattenauflagefläche (14) besitzt, wobei sich der obere Zylinderabschnitt (6) über eine im Längsschnitt kreisförmig gekrümmte Schulter (8) zum unteren Zylinderabschnitt (7) hin verjüngt, die stufenlos in die Mantelfläche des unteren Zylinderabschnitts (7) einmündet, daß sich der Spannbolzen (5) im Mittelbereich von einem Zylinderabschnitt (9) über eine im Längsschnitt kreisförmig gekrümmte Schulter (10) zu einem Schaft (11) mit Gewinde (12) hin verjüngt, wobei der Zylinderabschnitt (9) stufenlos in die Schulterfläche einmündet, daß die Kreisradien der einzelnen Schultern (8, 10) jeweils in einem Verhältnis von 1 : 1 bis 1 : 2,3 zum Radius des Zylinderabschnitts (9) des Mittelbereichs des Spannbolzens stehen und daß die Achse des Gewindes (13) im Werkzeugkörper (1) mit der Achse der Zylinderabschnitte (6, 7) einen Winkel von 2° bis 7° einschließt.

2. Schneidwerkzeug nach Anspruch 1, dadurch gekennzeichnet, daß die zwei über eine Schulter (8) verbundenen Zylinderabschnitte (6, 7) in einer Hülse (4) angeordnet sind, die in eine Ausnehmung mit gleichbleibendem Durchmesser des Werkzeugkörpers eingesetzt ist.

3. Schneidwerkzeug nach Anspruch 2, dadurch gekennzeichnet, daß die Hülse (4) in Längsrichtung geschlitzt und mit einem Ringbund versehen ist, der in eine Ausnehmung einer Unterlagsplatte (3) eingreift.

## Claims

1. Cutting tool, comprising a bore in its tool body (1), a recess seat with a bottom face (14) and at least one lateral supporting face for a cutting insert (2), furthermore a central hole in the insert and a clamping pin (5) as clamping means, whereby the central hole is engaged with the clamping pin of rotational symmetric shape in its upper end section (15), which is approximately of the shape of a flattened ball, whereby the clamping pin is provided to be screwed with its lower end into a threaded hole (13) of the tool body and is abutting with its central section against the tool body (1), and whereby the axis of the threaded hole (13) is inclined compared with the axis of the bore (6, 7) in the tool body, characterized in, that the bore has in its region adjacent to the recess two cylindrical sections (6, 7) with different diameters and with a common axis, perpendicular to the bottom face (14) for the cutting insert, whereby the upper cylindrical section (6) is tapering to the lower cylindrical section (7) along an in cross section circular curved shoulder (8), which infinitely leads into the lower cylindrical section (7), that the clamping pin (5) is tapering in its central area along an in cross section circular curved shoulder (10) between a cylindrical section (9) and a shank (11) with thread (12), whereby the cylindrical section (9) is leading infinitely into the shoulder, that further the ratio between the radius of each individual shoulder (8, 10) and the radius of the cylindrical section (4) of the central area of the clamping pin is between 1 : 1 and 1 : 2,3 and that the axis of the threaded hole (13) in the tool body (1) is enclosing an angle between 2° and 7° with the axis of the cylindrical section (6, 7).

2. Cutting tool according to claim 1, characterized in, that the two cylindrical sections (6, 7) connected by a shoulder (8) are part of a bush (4), placed in a recess of constant diameter in the tool body.

3. Cutting tool according to claim 2, characterized in, that the bush (4) is slotted in longitudinal direction and is provided with a ring collar, engaged with a recess of a supporting plate (3).

## Revendications

1. Outil de coupe, qui comporte dans son corps d'outil (1) un perçage ainsi qu'un évidement possédant une surface de support (14), et au moins une surface d'appui latérale pour une plaquette amovible (2), munie d'un trou central, qui peut être bloquée au moyen d'un boulon de tension (5). Le boulon de tension, qui présente une constitution à symétrie de révolution, s'engage dans le trou central par son extrémité supérieure (15) ayant sensiblement la forme d'une sphère décalottée, peut être vissé dans un perçage fileté (13) du corps d'outil par son extrémité inférieure, et s'appuie contre le corps d'outil (1) par sa région centrale, l'axe du perçage fileté (13) s'étendant obliquement par rapport à l'axe du perçage (6, 7) dans le corps d'outil. Il est caractérisé par le fait que dans la région adjacente à l'évidement, le perçage comporte deux sections cylindriques coaxiales coaxiales (6, 7) qui possèdent des diamètres différents et dont la direction axiale est perpendiculaire à la surface de support (14) de la plaquette amovible, la section cylindrique supérieure (6) se rétrécissant en direction de la section cylindrique inférieure (7), par l'intermédiaire d'un épaulement (8) incurvé en arc de cercle en coupe longitudinale qui arrive sans décrochement dans la surface latérale de la section cylindrique inférieure (7). Il est également caractérisé par le fait que dans la région centrale le boulon de tension (5) se rétrécit à partir d'une section cylindrique (9) en direction d'une tige (11) munie d'un filetage (12), par l'intermédiaire d'un épaulement (10) incurvé en arc de cercle en coupe longitudinale, la section cylindrique(9) arrivant sans décrochement dans la surface de l'épaulement, par le fait que les rayons de courbure des épaulements individuels (8, 10) se trouvent respectivement dans un support de 1/1 à 1/2,3 avec le rayon de la section cylindrique (9) de la région centrale du boulon de tension, et que l'axe du filetage (13) dans le corps d'outil (1) forme un angle de 2 à 7 degrés avec l'axe des sections cylindriques (6, 7).

2. Outil de coupe suivant la revendication 1, caractérisé par le fait que les deux sections cylindriques (6, 7) réunies par l'intermédiaire d'un épaulement (8) sont disposées dans un manchon (4) qui est logé dans un évidement, possédant un diamètre constant, du corps d'outil.

3. Outil de coupe suivant la revendication 2, caractérisé par le fait que ce manchon (4) est fendu suivant la direction longitudinale, et est muni d'une collerette annulaire qui s'engage dans un évidement d'une plaquette de support (3).

0 037 554

Fig. 1

Fig. 2